# EUROPEAN PATENT SPECIFICATION

(11) **EP 2 405 789 B1**
(45) Date of publication and mention of the grant of the patent: **22.08.2012**
(21) Application number: 10707882.6
(22) Date of filing: 02.03.2010
(51) Int. Cl.: A47J 27/00, A47J 27/10

(54) **BARBECUE CHOCOLATE DIP SET**
SCHOKOLADENEINTAUCHSATZ FÜR EINEN GRILL
ENSEMBLE À FONDUE AU CHOCOLAT AU BARBECUE

(30) Priority: 02.03.2009 EP 09154071
(43) Date of publication of application: 18.01.2012
(73) Proprietor: Chocoladewerken Gudrun, 2500 Lier (BE)
(72) Inventor: WALRAEVENS, Eddy, 9570 Lierde (BE)
(74) Representative: Caers, Raphael Frans Ivo
(86) International application number: PCT/EP2010/052626
(87) International publication number: WO 2010/100152

(56) References cited:
- WO-A-92/13476
- WO-A-94/12085
- WO-A1-03/092454
- FR-A- 2 647 003
- GB-A- 2 329 573
- JP-A- 63 301 750
- US-A- 1 985 486
- US-A- 4 541 411
- US-A- 4 595 120
- US-A- 5 123 563
- "Excerpts ED - Minifie; Bernard W" 31 August 1989 (1989-08-31), CHOCOLATE, COCOA, AND CONFECTIONERY: SCIENCE AND TECHNOLOGY (THIRD EDITION),, PAGE(S) 122 - 123,174 , XP007913022 ISBN: 9780834213012 page 122 - page 123; tables 4.3,4.4 page 175; table 6.1

## Description

### FIELD OF THE INVENTION

The present invention relates to means for preparing a dessert comprising molten chocolate or a chocolate dip using only the heat of a burning barbecue. More particular, the invention is directed to a set for preparing a molten chocolate dip on a barbecue.

### BACKGROUND OF THE INVENTION

A barbecue is typically associated with grilling meat or fish, usually with the food being placed directly on a metal grid over an open fire burning charcoal, dry wood, or gas, or over an electrical radiation heating element. Barbecue heating thus typically involves the exposure of the food to be grilled to a high level of radiation heat. The purpose is typically to trigger by heating the Maillard reaction, a form of non-enzymatic browning process in the preparation of many types of food which involves a chemical reaction between an amino acid and a sugar and which is responsible for a range of colours, odours and flavours that are highly appreciated by many consumers of cooked foods. A difficulty with barbecue grilling is to control the cooking process such that the food does not burn, which is the reason for the advice for continuous supervision of the cooking process over a barbecue. With more sensitive foods such as fish, shellfish, mushrooms, fruit or vegetables, the food may be placed in a container, optionally having undulations and/or perforations in the bottom plate. This may serve the purpose of providing at least a partial shielding of the sensitive food from the high level of radiation heat and/or collecting liquids that may evolve from the food during the cooking process.

The risk of burning of the food exists in particular with disposable barbecue devices. Such devices usually comprise a closed container unit with a central volume for receiving coal as the heating medium. The food products to be cooked are positioned on top of the top wall of the container or on top of a grid positioned on the container. As a result, the distance between the food products and the heating source, i.e. the coals, is small, which increases the risk of having a non-uniform heating profile, and of burning of the food products.

In order to reduce the risk for burning of the food products, most barbecue devices comprise means for varying the distance between the grid, on which the food products and/or cooking containers are positioned, and the heating source. This way optimum positioning of the food to be cooked with respect to the heating source may be achieved, taking into account the nature of the food product. The distance between the food products and the coals should not be too high, because this adversely increases the cooking time for the food products. The distance between the food products and the coals should not be too small either, because this may cause the food products to bum.

Chocolate desserts have conventionally enjoyed a high popularity. The more difficult ones to prepare are those with a warm liquid sauce, especially in combination with a cold substrate, such as the famous and traditional "Dame Blanche" combination of ice cream, optionally a whipped cream topping, and a warm chocolate sauce on the side giving the consumer the privilege of pouring the sauce over the cold substrates. Those who have tried preparing the warm chocolate sauce have found the difficulties involved in melting chocolate, i.e. that chocolate is a notoriously heat-sensitive foodstuff, which readily bums when exposed to excessive heat, especially when the heat supplied is not spread uniformly such as with an open flame. Melting chocolate is therefore usually done "au bain marie", i.e. by putting a cooking container containing the chocolate in or on top of a water basin contained in a second container which is then put on the stove.

Kitchen utensils suitable for melting chocolate "au bain marie" are for instance described in US 1,985,486 and WO 03/092454. These utensils however are complex assemblies, costly in production, and difficult in use as they require water as the heat transfer medium. They are too complex for being considered or acceptable for a single use, i.e. as a disposable container. They are designed for readily being cleansed and hence for multiple subsequent reuses. Consequently, they require a relatively high level of effort, preparation and aftercare when used to provide a dessert involving molten chocolate or a chocolate dip.

More recently, so-called "chocolate fountains" have grown in popularity, especially for weddings and parties. For these chocolate fountains, a liquid mixture of chocolate and usually vegetable oil is prepared separately. The chocolate dip sauce may be prepared in a microwave but preferably, in order to avoid burning of the chocolate, in a double heater where water is kept simmering in a lower pan on the cooking stove, upon which an upper pan is placed such that the water vapour in the lower pan condenses against the bottom of the upper pan. During the melting process, manual stirring is required in order to avoid chocolate sticking to the bottom of the pan and the risk of burning. When a homogeneous mixture is obtained of the suitable temperature and viscosity, the thus obtained chocolate dip sauce is then poured into a preheated fountain device, wherein typically a vertical auger inside a vertical pipe, driven by an electric motor, circulates the chocolate dip sauce over a fountain canopy, the sauce dripping off the canopy subsequently being collected in a lower bowl which feeds the dip sauce back to the auger. The chocolate dip is further kept liquid by low level extra electrical heat provided at the bottom of the auger where circulation is assured, thereby minimizing the risk for local burning of the chocolate in the dip sauce. Treats, such as pieces of pineapple, kiwi or strawberries, , may then be held in the chocolate dip dripping off the fountain canopy. The treats are typically colder than the chocolate dip, which increases the viscosity of the dip in contact with the treat and allows the treat to retain a layer of high viscosity, or depending on the temperature of the treat and the composition of the chocolate dip, even a solid layer of chocolate dip ready for consumption. These chocolate fountains also need to be cleaned thoroughly before they can be reused, which is a time consuming effort.

These chocolate fountains thus require a specially designed device, a live power connection for powering the motor and the heater of the device, a separate preparation of the warm liquid chocolate dip, involving the melting of the chocolate in an oil using a double heater on a cooking stove, transferring of the chocolate dip sauce into the preheated fountain device and subsequently with little delay activating the fountain circulation, and requires an extensive cleaning effort afterwards to return the device into a condition it can be stored in for later reuse.

These chocolate fountains thus require a significant investment for the consumer and a lot of in-house preparation and diligent aftercare work, which together represent an intensive consumer burden and in particular makes them rather unsuitable for use outdoors during smaller garden parties or during daytrips. In such circumstances, live power is usually difficult to arrange, and the only heating source available is usually a barbecue used for preparing food for the main course of the meal. It is also cumbersome to set up the complex fountain device in such circumstances. All these drawbacks the consumer wants to avoid in association with a leisure event such as a party, in particular a garden party, or a daytrip picnic.

Providing the popular chocolate dip desserts is thus for a number of practical reasons undesirable or rather impossible with the conventional means known today, at such occasions where typically the only heating means available is a burning barbecue. In addition, the heat of a barbecue is notoriously poor in terms of uniformity and heating control, such that it has been counter-intuitive to combine barbecue heating with a highly heat sensitive foodstuff processing such as melting chocolate.

There remains therefore a need to enable such a combination of heating source and melting chocolate, which may provide the consumer the possibility to also enjoy one of the most popular desserts at occasions such as barbecue events in the garden or outdoors during daytrips.

It is an object of the present invention to provide a solution that fills this need. The present invention aims to obviate or at least mitigate the above described problem and/or to provide improvements generally.

### SUMMARY OF THE INVENTION

According to the invention, there is provided a set for preparing molten chocolate or a chocolate dip, typically a molten chocolate dip, on a barbecue as defined in any of the accompanying claims.

More particularly the set according to the invention comprises chocolate and a suitable disposable double walled-bottom cooking container for melting the chocolate using the heat of a burning barbecue, whereby the chocolate is provided as a chocolate formulation suitable for the purpose of being melted in the cooking container using the heat of a burning barbecue, whereby the disposable cooking container is made of a metal foil material and whereby an air laver is provided as insulating material between the two bottom walls. More preferably the chocolate is further provided in a form suitable for being molten in the cooking container using the heat of a burning barbecue.

We have surprisingly found that, contrary to conventional knowledge and against intuition, suitable chocolate may be melted on a burning barbecue without spoiling the chocolate by burning, provided a suitable container is employed. The invention therefore brings the advantage that a dessert involving molten chocolate or a chocolate dip may be prepared in technically constrained environments such as gardens or picnic places, where the only source of heat may be a burning barbecue.

The present invention makes it possible to offer the consumer the enjoyment of his favourite dessert with possibly a minimum of effort, preparation and aftercare.

The invention further provides for the use of the set according to the invention for preparing molten chocolate or a chocolate dip on a barbecue.

### BRIEF DESCRIPTION OF THE DRAWINGS

Figure 1 shows a side view of a preferred embodiment of the cooking container according to the present invention.
Figure 2 shows a cross section of the cooking container shown in figure 1 along the line II-II.
Figure 3 shows a 3-dimensional view of the cooking container shown in figures 1-2.

### DETAILED DESCRIPTION

The chocolate according to the present invention is preferably provided as a suitable formulation for being molten in the cooking container according to the present invention, and this while using the heat of a burning barbecue. We prefer to provide a chocolate with a favourable melting behaviour, preferably both in terms of physical and organoleptic properties as in terms of form and shape.

the chocolate according to the present invention preferably is a chocolate formulation. The chocolate formulation according to the present invention contains cocoa butter, sugar, a small amount of emulsifier, such as lecithine in a typical amount of about 0.5% wt or less, and an even smaller amount of vanilla flavouring, such as vanillin in an amount of typically about 0.05 wt. The phenolic aldehyde C₈H₈O₃ named vanillin, with chemical name 4-hydroxy-3-methoxybenzaldehyde, or its ethyl homologue, may be provided via a synthetic pathway, but we prefer to use, in the amount given above, the natural vanilla extract obtained from the vanilla bean, of which vanillin is the chief fragrant component, but which contains several hundred more and different chemical compounds, many of which being beneficial to the taste and odour of the chocolate, and the complexity and the enjoyment thereof.

The amount of cocoa butter in the chocolate formulation of the present invention is preferably at least 18% by weight. Lower amounts may be suitable, but such formulations are rather considered being "imitation chocolate", and under particular jurisdictions may not even be entitled to the name "chocolate".

The chocolate formulation of the present invention may further comprise an amount of vegetable fat or oil, which preferably belongs to the class of cocoa butter equivalents (CBE), i.e. products which are commonly known and/or defined as such in the trade. Preferably the amount of vegetable fat or oil in the formulation is at most 5% by weight. We prefer to have less than 5% by weight in the chocolate formulation of the present invention, such as at most 3% by weight, more preferably at most 2% by weight, even more preferably at most 1% by weight, yet more preferably at most 0.5% by weight, and most preferably no additional vegetable fat or oil at all, meaning 0% CBE. This brings the advantage that the chocolate composition complies better with the consumer expectation for high quality chocolate, such as the chocolate known as "Belgian Chocolate", wherein the only fat present is supposed to be cocoa butter without any added other vegetable fat or oil.

The chocolate according to the present invention may be provided as dark, also called "pure" chocolate or chocolate per se, or it may be provided as "milk" chocolate, or it may be provided as white chocolate. In addition the chocolate may contain additional flavouring.

When the chocolate according to the present invention is provided as white chocolate, the formulation typically does not contain any other cocoa components than the cocoa butter, of which we prefer to have at least 20% by weight present in the formulation, preferably at least 25% and more preferably at least 30% by weight. White chocolate may further comprise dry matter obtained from milk, preferably in an amount of at least 14% by weight, more preferably at least 16% by weight and even more preferably at least 18% by weight. The white chocolate formulation may further comprise milk fat, preferably in an amount of at least 3.5% by weight, more preferably at least 4% by weight and even more preferably at least 5% by weight.

When the chocolate according to the present invention is provided as milk chocolate, the formulation typically contains at least 25% by weight of dry matter obtained from cocoa beans, which dry matter includes the cocoa butter. We prefer to use at least 30% by weight, more preferably at least 35% or even 40% by weight of such dry matter in the milk chocolate formulation according to the present invention. The amount of dry matter from cocoa beans other than fat is preferably at least 2.5% by weight, more preferably at least 3% or even 3.5% by weight. For obtaining a milk chocolate formulation, an amount of dry matter obtained from milk is added, typically at least 14% by weight, but preferably at least 16%, more preferably at least 18% and even more preferably at least 20% by weight. The amount of milk fat is preferably at least as much as specified in the white chocolate formulation given above, and the amount of fats, i.e. the sum of the cocoa butter and the milk fat is preferably t least 25%, more preferably at least 30% and even more preferably at least 35% by weight.

When the chocolate according to the present invention is provided as dark or pure chocolate, the formulation typically contains at least 35% by weight of dry matter obtained from cocoa beans, which dry matter includes the cocoa butter. We prefer to use at least 40% by weight, more preferably at least 45% or even 50% by weight of such dry matter in the dark chocolate formulation according to the present invention. The amount of dry matter obtained from cocoa beans in the formulation may be even higher, but we prefer to use at most 76% by weight, preferably at most 70% by weight, more preferably at most 60% by weight and most preferably at most 55% by weight in the dark chocolate formulation. The amount of cocoa butter in the dark chocolate formulation is preferably at least 18% by weight, more preferably at least 22% by weight, even more preferably at least 25% by weight and most preferably at least 27% by weight of the chocolate formulation. The amount of dry matter from cocoa beans other than fat is preferably at least 14% by weight, more preferably at least 16% or even 18% by weight, and most preferably at least 20% by weight.

Further to the "colour" of the chocolate as explained above, the chocolate according to the present invention may be provided in further variants, such as fruit chocolates, as praliné chocolate, typically involving hazelnuts, or as ganache. There is hardly a limit to the number and type of flavours that may be added to the chocolate formulation according to the invention. The more commonly known are the strawberry, orange, lemon, lime, raspberry, forest berries, red berry and blackberry flavours, and less common tastes go as far as black pepper or even garlick flavouring, with many more also being suitable. All these flavours may be used individually or in combination with each other in the chocolate according to the present invention.

The chocolate according to the present invention preferably has a particular particle size, i.e. the crystals present in the chocolate in the matrix of the rest of the chocolate preferably have a size of at most 50 micrometer, more preferably at most 40 micrometer, even more preferably at most 30 micrometer, yet more preferably at most 25 micrometer, and most preferably around 22 micrometer. The particle size of a chocolate may readily be measured by methods known in the art, such as by using a micrometer apparatus. These preferred particle sizes contribute to the quality appreciation by the consumer as they are important for the organoleptic properties of the chocolate, such as the mouth feel. To this extent, they help to comply further with the consumer appreciation for a high quality chocolate, in particular under the highty reputable label of "Belgian Chocolate".

The chocolate according to the present invention preferably has a particular viscosity at a given temperature. We prefer to measure chocolate viscosity using the method IOCCC No 10-1973-RHEOMAT 180/40°C, and we prefer to provide a chocolate having a viscosity at 40°C of at most 10 Pa.s, preferably at most 8 Pa.s, more preferably at most 7 Pa.s, even more preferably at most 6 Pa.s, and typically around 5.6 Pa.s. We have found that if the viscosity is too high, the amount of chocolate that sticks to the treat dipped into the molten chocolate tends to be excessive, and this feature helps to avoid that drawback. On the other hand, we prefer the chocolate to have a viscosity that is not too low either, such as at least 1 Pa.s, preferably at least 3 Pa.s, more preferably at least 4 Pa.s and most preferably at least 5 Pa.s, again measured at the same temperature of 40°C. This brings the advantage that a suitable amount of chocolate ends up on the treat being dipped into the chocolate, and reduces the risk that chocolate drips off the treat before consumption and spoils table cloth or clothing of the consumer.

The chocolate of the present invention also preferably has a preferred yield value, again measured with a rheomat apparatus and at 40°C. We prefer a chocolate having a yield value at 40°C of at most 100 Pa, preferably at most 70 Pa, more preferably at most 50 Pa, even more preferably at most 40 Pa and most preferably at most 35 Pa. We prefer the yield value at 40°C to be at least 1 Pa, preferably at least 10 Pa, more preferably at least 20 Pa and most preferably at least 30 Pa. This feature brings the advantage that the treat is more readily covered with the molten chocolate or the chocolate dip, during the dipping.

The cocoa butter in the chocolate according to the present invention may be of the soft, the standard, or of the hard type. We prefer to use the harder types of cocoa butter, more preferably the hard type. The cocoa butter may in this respect be characterised by a particular profile of solid fat content (SFC) in function of temperature. SFC of a fat is typically measured using a method according to IUPAC 2.150a. We prefer to use a cocoa butter having an SFC at 30°C of at least 35%, preferably at least 42%, and more preferably at least 55%. This brings the advantage that the chocolate does not start to melt too soon in the container according to the invention when put onto the burning barbecue. This is appreciated by the consumer because it allows more time for the chocolate odour to develop and spread, and hence to build up the consumer expectations towards the dessert.

The listed preferences within the scope of the present invention with respect to the chocolate formulation provide embodiments that further improve the combination of desired properties in terms of organoleptic behaviour of the chocolate when consumed, its stability during preparation and storage, and its melting behaviour when being heated on the barbecue.

The chocolate according to the present invention is also preferably provided in a form suitable for being molten in the cooking container according to the present invention and using the heat of a barbecue. We therefore prefer to provide the chocolate according to the present invention in smaller pieces, such as measuring at most 5 cm in its longest dimension, more preferably at most 4 cm, even more preferably at most 3 cm and yet more preferably at most 2 cm in its longest dimension. We have found that providing the chocolate in such a form makes it more suitable for melting as intended with the present invention because of a better contact of the chocolate with the cooking container according to the present invention. The melting process therefore runs smoother, it is easier for the consumer to start stirring the container content earlier, and leads to a result that is more satisfying to the consumer. It is also easier for the consumer to add another ingredient into the preparation process, such as an amount of cream or milk or a vegetable oil, if this is desired. Providing the chocolate in such a suitable form brings the advantage that the consumer does not need to chop up a block of chocolate, or larger lumps of chocolate, in order to obtain the advantages of the smaller pieces. Our most preferred form for providing the chocolate according to the present invention is as drop buttons, i.e. a rounded shape resembling a flattened half ball with a flat bottom surface, as this form is most readily obtainable in the last step of the chocolate production process. We prefer these drop buttons to have diameter of about 20 mm ± 5 mm, with a minimum diameter of 5 mm and a maximum diameter of 50 mm.

The cooking container according to the present invention preferably is a double walled cooking container. Typically this container comprises a volume between the bottom side and the top side in which a thermally insulating material is received for thermally insulating the food products from the heating source, wherein the thermally insulating material is a gaseous or solid material.

The invention will be illustrated with the specific example of coals of a barbecue unit as the heating source. However, the cooking container according to the present invention may also be used on a gas-fired barbecue unit or any available means.

The volume provided between the bottom side and the top side provides a thermally insulating layer between the food products, which are positioned on the top side, and the coals, which are provided beneath the bottom side. This thermally insulating layer insulates the food products from the heat of the coals assuring that the temperature reaching the food products is lower compared to a cooking container without insulating layer and therefore reducing the risk of burning of the food products.

Double-walled cooking recipients are known in the art.

FR 2647003 discloses a bowl-shaped cooking pan, also called a "wok", having a steel outer wall and a stainless steel or aluminium inner wall, suitable for the strong gas heating typically used in Chinese cooking. The inner surface of the container may be clad with a layer of fluorocarbon polymer such as PTFE or Teflon^{®}, and the outer layer may be clad with an enamel layer. Thanks to the double layer design, the temperature stays below 380°C, which is sufficiently low to avoid degradation of the wok, including the more heat sensitive internal polymer layer. WO 92/13476 discloses a pan having a bottom provided with an air space, and which prevents food from sticking to the bottom during its use with a strong flame and for a long time, without the need for an internal coating, so that there is no risk that foreign matter, possibly of a toxic kind, can be ingested or that undesired reactions arise and the organoleptic characteristics of e.g. oil, may be lost.

GB 2329573 discloses a saucepan comprising inner and outer vessels defining in between them an enclosed and sealed space containing helium, which has a high thermal conductivity, and which provides uniform heating during use. The saucepan of GB 2329573 is more suitable for cooking thick, viscous foods such as custards or sauces upon a gas or electric burner, avoiding the need for a double boiler saucepan or a "bain-marie".

Further double-walled cooking containers are disclosed in US Patent Numbers 4,541,411; 4,595,120; and 5,123,563, and in WO 94/12085. These cooking containers may be suitable for preparing cookies, muffins or pies in conventional ovens.

The two walls of all these double-walled containers from the prior art are permanently fixed to each other, making the space in between them typically inaccessible and the distance between the two walls invariable.

None of these double-walled containers are suggested for melting the highly heat-sensitive foodstuff which chocolate is on a heat source as notoriously poor in heat distribution as a barbecue.

The applicants have surprisingly found that, when putting the chocolate according to the invention into the cooking container according to the invention, the chocolate may be molten, while the risk of burning of the chocolate is substantially reduced. In particular, it has been found that, it is possible to position a cooking container according to the present invention which contains chocolate, with its bottom side on the same height with respect to the coals as other food products, such as meat, at minimum risk of burning of the chocolate.

The thermally insulating material received within the volume between the bottom side and the top side is a gaseous or solid material. Compared to fluid insulating materials, gaseous and solid materials make the food container easier to handle and easier to manufacture.

In particular, air is preferably used as a thermally insulating material for the cooking container of the present invention. Using air has the advantage that it is readily available and that it can be used in combination with any other material and by any known fabrication method. Moreover, a small air layer provided between the top side and the bottom side, may already result in a substantial thermal insulation. Using air as a thermally insulating layer further has the advantage that it simplifies the production of the cooking container.

In a preferred embodiment of the invention the cooking container is a double walled-bottom container unit. Thereto, the container unit comprises a first bottom wall, a second bottom wall positioned at a distance above the first bottom wall, and an upright circumferential side wall connecting the first and the second bottom wall for forming a circumferentially closed container. A top face of the second bottom wall functions as the top side of the cooking container, on which the chocolate may be positioned. A bottom face of the first bottom wall functions as the bottom side of the cooking container and is provided for being positioned on the heating source. The space provided between the first and the second bottom wall and part of the upright circumferential side wall connecting the first and second bottom wall defines the thermally insulating volume provided for thermally insulating the chocolate from the heating source.

Such a double bottom container unit has the advantage that it can be made in a wide variety of materials, using all kinds of production methods. Depending on the cost of the material and fabrication method used, one could chose to make the double bottom container of a sustainable material, resulting in a re-usable container, or to make the container of a cheaper material for example for disposable containers. A re-usable container could for instance be made of a heat resistant plastic material for instance using injection moulding and providing an air layer as insulating material between the two bottom walls. A disposable container could for instance be made of a cheaper metal foil material and providing an air layer as insulating material between the two bottom walls.

In another preferred embodiment the cooking container comprises a first and a second container unit, the second container unit being positioned at least partly in the first container unit. Each of the container units is a circumferentially closed container unit which comprises a bottom wall and an upstanding side wall extending from a circumferential edge of the bottom wall in an upright direction. The first container unit is provided for receiving the second container unit in such a way that a distance is provided between the bottom wall of the first container unit and the bottom wall of the second container unit for creating the thermally insulating volume.

Similarly to the first preferred embodiment, this second preferred embodiment has the advantage that it can be made in a lot of different materials, making use of all kinds of fabricating methods. The first and the second container unit can be made separately and be suitably connected afterwards, or can be made in one piece. The connection between the first and the second container unit can be fixed or detachably. A detachable connection has the advantage that both container units can be cleaned separately. If at least one of them is disposable, it may also be disposed off independently, and the other container may be cleaned and suitably be reused. The first and second container units can be made of the same or of different materials, adjusted to their use. The material of the first receiving unit will usually be made of a heat resistant material, whereas the material of the second receiving unit will be chosen to be suitable of receiving food products.

The cooking container according to the present invention can be made in any other way considered suitable by the person skilled in the art. The shape of the cooking container, the fabrication method, the material being used and the type of insulating material being used, can be adjusted.

The invention will be further elucidated by means of the following detailed discussion of the appended figures.

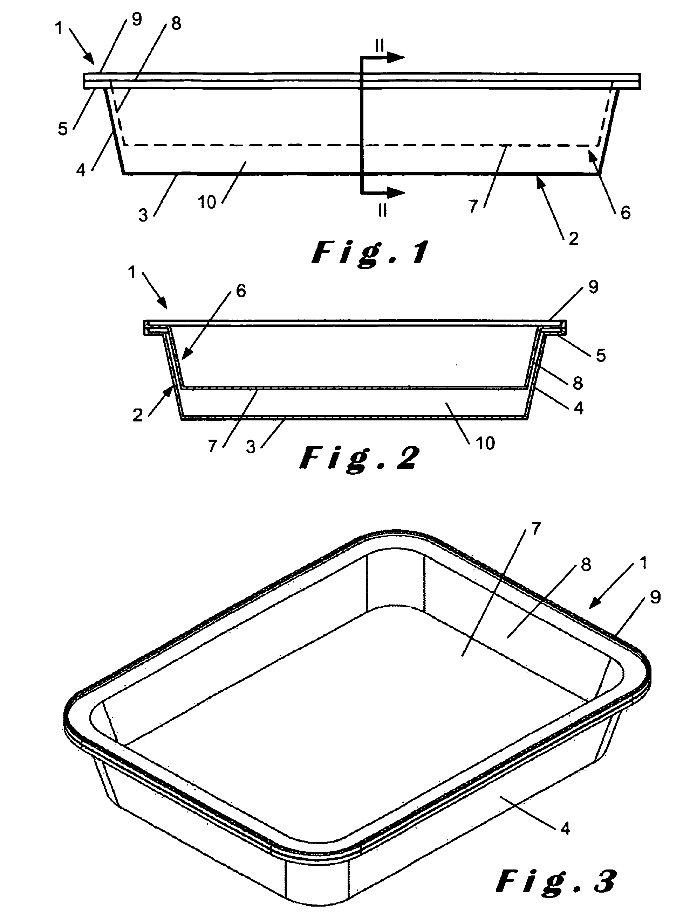

The cooking container 1 shown in figures 1-3 is made of a first 2 and a second 6 container unit. The first container unit 2 comprises a first bottom wall 3 and a first upright circumferential side wall 4 which enclose a first central volume. The second container unit 6 comprises a second bottom wall 7 and a second upright circumferential side wall 8. The second container unit 6 is received in the first central volume of the first container unit 2. A top side of the second bottom wall 7 of the second container unit 6 defines the top side of the cooking container 1 on which the chocolate according to the invention is placed. A bottom side of the first bottom wall 3 of the first container unit 2 defines the bottom side of the cooking container 1 and is provided for being positioned on the heating source, more particularly on the barbecue, preferably on the barbecue grill plate.

The connection between the first 2 and the second 6 container unit can be done in any way considered suitable by the person skilled in the art.

In figures 1-3, the connection between the first 2 and the second 6 container unit is done by folded edges 5, 9 of the first 2 and the second 6 container unit which are positioned and resting on each other. In fact, the first upright side wall 4 of the first container unit 2 may comprise a first folded edge 5 folded outwardly from the first container unit 2 and the second upright side wall 8 of the second container unit 6 may comprise a second folded edge 9 folded towards the outside of the second container unit 6. The second folded edge 9 may then rest on at least part of the first folded edge 5 with its lower face.

In another embodiment, only the second container unit 6 comprises a folded edge 9, which is then positioned on a top edge of the upright side wall 4 of the first container unit 2.

In another embodiment, none of the container units comprises a folded edge. In that case, the connection may for instance be done by connecting the upright side walls 4, 8 of the first 2 and second 6 container units at least partly to each other, i.e. by connecting an outer face of the second upright side wall 8 of the second container unit 6 to an inner face of the first upright side wall 4 of the first container unit 2.

Another possibility may be that the connection is established because the dimensions of the second bottom wall 7 are larger than the dimensions of the first bottom wall 3, such that the second bottom wall 7 is clamped within the first upright side wall 4, creating a distance between the first 3 and the second 7 bottom wall.

After connection of the first 2 and the second 6 receiving unit, the first 3 and the second 7 bottom wall are positioned at a distance from each other and define a thermally insulating volume 10 between them.

In figures 1-3 the height of the second upright side wall 8 is smaller than the height of the first upright side wall 4, creating a distance between the first 3 and the second 7 bottom wall. However, the height of the first 4 and second 8 upright side walls does not need to be different. Depending on the connection method between the first 2 and the second 6 container unit, the height of the first upright side wall 4 may be equal to, smaller or higher than the height of the second upright side wall 8.

In figures 1-3 the first 4 and the second 8 upright side walls are positioned on a distance from each other. The circumferential volume defined between the first 4 and the second 8 upright side is filled with a thermally insulating material and functions as an additional thermally insulating layer between the chocolate and the heating source, reducing the risk of burning of the chocolate. The thermal insulating material provided in the circumferential volume can be the same material or differ from the thermal insulating material provided between the top and the bottom side. Alternatively, the first 4 and the second 8 upright side walls may completely or partially contact each other.

Depending on the type of chocolate the cooking container 1 is used for, it can be desirable to change the thickness of the thermally insulating layer. Thereto, the upright part of the cooking container 1 according to the present invention may comprise distance varying means provided for varying the distance between the bottom and top side of the cooking container 1. In case the cooking container 1 comprises two container units 2, 6, the distance varying means may for instance comprise cooperating positioning means provided on opposite faces of the upright side walls 4, 8 of the first 2 and second 6 container unit. These cooperating positioning means may for instance comprise a cooperating tongue and groove connection or a cooperating protrusion and recess. However, any other distance varying means considered suitable by the person skilled in the art is possible.

The cooking container 1 can be made from any material considered suitable by the person skilled in the art, for instance from a heat resistant material such as a metal foil, such as for instance an aluminum foil. The cooking container 1 can be made of more than one material. It could for instance be possible to make the top side of the cooking container 1 from a material different from this of the bottom side.

The bottom side of the cooking container 1 according to the present invention can be positioned in direct contact with the heating source or on a distance from the heating source. Whether or not this is the case, may depend for instance on the type of chocolate that is placed in the cooking container 1 and/or on the amount of heat generated by the heating source.

The upright part connecting the bottom side and the top side may extend in an upright direction above the top side or not. Preferably, at least part of the upright part extends above the top side, because this provides the cooking container with a circumferential central volume in which the chocolate can be placed without the risk of falling or running out the cooking container.

We prefer the cooking container according to the present invention to have a distance between the two container bottoms in the range of 2 mm to 50 mm, more preferably in the range from 5 mm to 30 mm, even more preferably in the range from 7 mm to 25 mm and most preferably in the range from 10 mm to 20 mm.

In an embodiment of the present invention, the cooking container comprises two independent container units. As a further feature in this embodiment, the set may further comprise one or more spacers that may be placed in between the two container units when the cooking container is being assembled by the consumer and before placing it on the barbecue. This brings the advantage that the two container units are kept apart with a distance at least as large as the size of the spacers at the location of the spacers. This minimizes the risk that because of sagging, gravity or by a downward force exerted by the consumer during stirring or dipping of a treat into the chocolate dip, the two container units locally approach each other, make contact and that the insulation effect would be lost, which may lead to local burning of the chocolate.

These spacers may be provided in any suitable form or shape, as well as in variety of construction materials, with a preference that they may for sufficient time withstand the temperatures that may be reached in the compartment in between the two containers. A particularly suitable spacer has a square cross section. A particularly suitable construction material is wood, as after use this may be burned in the fire of the barbecue.

The cooking container is in particular suitable for melting the chocolate according to the invention on a barbecue, with a reduced risk of burning of the chocolate.

The applicants have surprisingly found that an embodiment of the set according to the present invention is also suitable for use in a microwave oven, even when the cooking container is made from aluminum foil. In those circumstances, the outer container unit is not used and the inner container unit containing the chocolate is put centrally on the glass plate of the microwave oven, or on a microwave resistant platter or container, in such a way that the unit does not touch or come close to the wall of the microwave oven. Under these circumstances, the suitable set preferably comprises the cooking container comprising the two container units.

As understood by those of skill in the art, the overall invention, as defined by the claims, encompasses other preferred embodiments not specifically enumerated herein.

## Claims

1. A set for preparing molten chocolate or a chocolate dip on a barbecue comprising chocolate and a disposable double walled-bottom cooking container (1) for melting the chocolate using the heat of a burning barbecue, whereby the chocolate is provided as a suitable chocolate formulation for being melted in the cooking container (1) using the heat of a burning barbecue, whereby the disposable cooking container (1) is made of a metal foil material and whereby an air layer (10) is provided as insulating material between the two bottom walls (3, 7)

2. The set according to claim 1 wherein the chocolate contains at most 5% by weight of a vegetable fat or oil other than cocoa butter.

3. The set according to claim 1 or 2 wherein the chocolate is selected from the list consisting of
(i) white chocolate preferably containing at least 20% by weight of cocoa butter,
(ii) milk chocolate preferably containing at least 25% by weight of dry matter obtained from cocoa beans, including cocoa butter,
(iii) dark chocolate preferably containing at least 35% by weight of dry matter obtained from cocoa beans, including cocoa butter,
and mixtures thereof.

4. The set according to any preceding claim wherein the chocolate has a crystal size of at most 50 micrometer.

5. The set according to any preceding claim wherein the chocolate has a viscosity at 40°C in the range of 1-10 Pa.s.

6. The set according to any receding claim wherein the chocolate has a yield value at 40°C in the range of 1-100 Pa.

7. The set according to any preceding claim wherein the cocoa butter in the chocolate has a solid fat content (SFC) at 30°C of at least 30%.

8. The set according to any preceding claim wherein the chocolate is provided in a form suitable for being molten in the cooking container using the heat of a barbecue, preferably in pieces measuring at most 5 cm in their longest dimension.

9. The set according to any preceding claim wherein the cooking container (1) comprises a bottom side (3) provided for positioning on the heating source, a top side (7) pointing away from the bottom side (3) for receiving the chocolate, an upright part (4, 8, 5, 9) connecting the bottom side (3) with the top side (7), **characterized in that** the top side (7) is positioned at a distance from the bottom side (3) to provide between them a volume (10) in which a thermally insulating material is received for thermally insulating the chocolate from the heating source, wherein the thermally insulating material is air.

10. The set according to claim 9 wherein the distance between the top side (7) and the bottom side (3) is in the range from 2 mm to 50 mm.

11. The set according to any preceding claim wherein the cooking container (1) comprises a first container unit (2) with a first bottom wall (3) and a first upright circumferential side wall (4) which enclose a first central volume, and a second container unit (6) with a second bottom wall (7) and a second upright circumferential side wall (8), wherein the second container unit (6) is received in the first central volume of the first container unit (2) in such a way that the first (3) and second (7) bottom wall are positioned at a distance from each other for creating the volume (10) for receiving the air as the thermally insulating material.

12. The set according to claim 11 wherein the upright side walls (4, 8) of the first (2) and the second (6) container unit comprise cooperating positioning means provided for varying the distance between the first bottom wall (3) of the first container unit (2) and the second bottom wall (7) of the second container unit (6).

13. The set according to any preceding claim wherein at least part of the cooking container (1) is made of aluminum.

14. Use of the set according to any preceding claim for preparing molten chocolate or a chocolate dip on a barbecue or in a microwave oven.

15. Use as claimed in claim 14 on a barbecue wherein the chocolate is kept in the molten state for a time sufficient to permit consumption of at least part of the molten chocolate.

## Patentansprüche

1. Satz zum Herstellen geschmolzener Schokolade oder eines Schokoladenbads auf einem Grill, umfassend Schokolade und einen Einwegkochbehälter mit doppelwandigem Boden (1), der die Schokolade unter Verwendung der Wärme eines glühenden Grills schmilzt, wobei die Schokolade als eine Schokoladenformulierung bereitgestellt ist, die geeignet ist, um in dem Kochbehälter (1) unter Verwendung der Wärme eines glühenden Grills geschmolzen zu werden, wobei der Einwegkochbehälter (1) aus einem Metallfolienmaterial gefertigt ist und wobei eine Luftschicht (10) als Isoliermaterial zwischen den zwei Bodenwänden (3, 7) bereitgestellt ist.

2. Satz nach Anspruch 1, wobei die Schokolade höchstens 5 Gew.-% eines pflanzlichen Fettes oder Öls enthält, das keine Kakaobutter ist.

3. Satz nach Anspruch 1 oder 2, wobei die Schokolade ausgewählt ist aus der Liste, bestehend aus
(i) weißer Schokolade, die vorzugsweise mindestens 20 Gew.-% Kakaobutter enthält,
(ii) Milchschokolade, die vorzugsweise mindestens 25 Gew.-% Trockenmasse enthält, die aus Kakaobohnen erhalten wird, einschließlich Kakaobutter,
(iii) Dunkle Schokolade, die vorzugsweise mindestens 35 Gew.-% Trockenmasse enthält, die aus Kakaobohnen erhalten wird, einschließlich Kakaobutter, und Mischungen davon.

4. Satz nach einem der vorherigen Ansprüche, wobei die Schokolade eine Kristallgröße von höchstens 50 Mikrometern aufweist.

5. Satz nach einem der vorherigen Ansprüche, wobei die Schokolade bei 40 °C eine Viskosität im Bereich von 1 bis 10 Pa.s. aufweist.

6. Satz nach einem der vorherigen Ansprüche, wobei die Schokolade bei 40 °C eine Fließgrenze im Bereich von 1 bis 100 Pa aufweist.

7. Satz nach einem der vorherigen Ansprüche, wobei die Kakaobutter in der Schokolade bei 30 °C einen Festfettgehalt (SFC) von mindestens 30 % aufweist.

8. Satz nach einem der vorherigen Ansprüche, wobei die Schokolade in einer Form bereitgestellt ist, die geeignet ist, um in dem Kochbehälter unter Verwendung der Wärme eines Grills vorzugsweise in Stücken mit Maßen von höchstens 5 cm in der längsten Abmessung geschmolzen zu werden.

9. Satz nach einem der vorherigen Ansprüche, wobei der Kochbehälter (1) eine Unterseite (3), die zum Anordnen auf der Wärmequelle bereitgestellt ist, eine Oberseite (7), die von der Unterseite (3) wegzeigt, um die Schokolade aufzunehmen, und einen aufrechten Teil (4, 8, 5, 9) umfasst, der die Unterseite (3) mit der Oberseite (7) verbindet, **dadurch gekennzeichnet, dass** die Oberseite (7) in einem Abstand von der Unterseite (3) angeordnet ist, um zwischen ihnen ein Volumen (10) bereitzustellen, in dem ein thermisch isolierendes Material aufgenommen ist, um die Schokolade von der Wärmequelle thermisch zu isolieren, wobei das thermisch isolierende Material Luft ist.

10. Satz nach Anspruch 9, wobei der Abstand zwischen der Oberseite (7) und der Unterseite (3) im Bereich von 2 mm bis 50 mm liegt.

11. Satz nach einem der vorherigen Ansprüche, wobei der Kochbehälter (1) eine erste Behältereinheit (2) mit einer ersten Bodenwand (3) und einer ersten aufrechten umlaufenden Seitenwand (4), die ein erstes zentrales Volumen einschließt, und eine zweite Behältereinheit (6) mit einer zweiten Bodenwand (7) und einer zweiten aufrechten umlaufenden Seitenwand (8) umfasst, wobei die zweite Behältereinheit (6) in dem ersten zentralen Volumen der ersten Behältereinheit (2) derart aufgenommen ist, dass die erste (3) und die zweite (7) Bodenwand in einem Abstand voneinander angeordnet sind, um das Volumen (10) zur Aufnahme der Luft als das thermisch isolierende Material zu schaffen.

12. Satz nach Anspruch 11, wobei die aufrechten Seitenwände (4, 8) der ersten (2) und der zweiten (6) Behältereinheit zusammenwirkende Positionierungsmittel umfassen, die zum Variieren des Abstands zwischen der ersten Bodenwand (3) der ersten Behältereinheit (2) und der zweiten Bodenwand (7) der zweiten Behältereinheit (6) bereitgestellt sind.

13. Satz nach einem der vorherigen Ansprüche, wobei mindestens ein Teil des Kochbehälters (1) aus Aluminium gefertigt ist.

14. Verwendung des Satzes nach einem der vorherigen Ansprüche zum Herstellen geschmolzener Schokolade oder eines Schokoladenbads auf einem Grill oder in einem Mikrowellenofen.

15. Verwendung nach Anspruch 14 auf einem Grill, wobei die Schokolade für einen Zeitraum, der ausreichend ist, um den Verbrauch mindestens eines Teils der geschmolzenen Schokolade zu ermöglichen, in geschmolzenem Zustand gehalten wird.

## Revendications

1. Ensemble pour préparer du chocolat fondu ou une fondue au chocolat sur un barbecue, comprenant du chocolat et un récipient de cuisson (1) à double fond jetable pour faire fondre le chocolat en utilisant la chaleur d'un barbecue à combustion, le chocolat étant prévu comme une formulation de chocolat appropriée pour être fondue dans le récipient de cuisson (1) en utilisant la chaleur d'un barbecue à combustion, le récipient de cuisson (1) jetable étant réalisé dans un matériau en feuille métallique et une couche d'air (10) étant prévue comme matériau isolant entre les deux parois de fond (3, 7).

2. Ensemble selon la revendication 1 dans lequel le chocolat contient au plus 5 % en poids d'une huile ou graisse végétale autre que du beurre de cacao.

3. Ensemble selon la revendication 1 ou 2 dans lequel le chocolat est sélectionné dans la liste consistant en
(i) chocolat blanc contenant de préférence au moins 20 % en poids de beurre de cacao,
(ii) chocolat au lait contenant de préférence au moins 25 % en poids de matière sèche obtenue à partir de fèves de cacao, comprenant du beurre de cacao,
(iii) chocolat noir contenant de préférence au moins 35 % en poids de matière sèche obtenue à partir de fèves de cacao, comprenant du beurre de cacao,
et des mélanges de ceux-ci.

4. Ensemble selon une quelconque revendication précédente dans lequel le chocolat a un taille cristalline d'au plus 50 micromètres.

5. Ensemble selon une quelconque revendication précédente dans lequel le chocolat a une viscosité à 40° C de l'ordre de 1-10 Pa.s.

6. Ensemble selon une quelconque revendication précédente dans lequel le chocolat a une limite d'écoulement à 40° C de l'ordre de 1-100 Pa.

7. Ensemble selon une quelconque revendication précédente dans lequel le beurre de cacao dans le chocolat a une teneur en graisse solide (SFC) à 30° C d'au moins 30 %.

8. Ensemble selon une quelconque revendication précédente dans lequel le chocolat est fourni dans une forme appropriée pour être fondu dans le récipient de cuisson en utilisant la chaleur d'un barbecue, de préférence en morceaux mesurant au plus 5 cm dans leur dimension la plus longue.

9. Ensemble selon une quelconque revendication précédente dans lequel le récipient de cuisson (1) comprend un côté inférieur (3) prévu pour le positionnement sur la source de chaleur, un côté supérieur (7) dirigé dans le sens opposé au côté inférieur (3) pour recevoir le chocolat, une partie verticale (4, 8, 5, 9) reliant le côté inférieur (3) au côté supérieur (7), **caractérisé en ce que** le côté supérieur (7) est positionné à une distance du côté inférieur (3) pour fournir entre eux un volume (10) dans lequel un matériau thermiquement isolant est reçu pour isoler thermiquement le chocolat de la source de chaleur, le matériau thermiquement isolant étant de l'air.

10. Ensemble selon la revendication 9 dans lequel la distance entre le côté supérieur (7) et le côté inférieur (3) est de l'ordre de 2 mm à 50 mm.

11. Ensemble selon une quelconque revendication précédente dans lequel le récipient de cuisson (1) comprend une première unité de récipient (2) avec une première paroi de fond (3) et une première paroi latérale circonférentielle verticale (4) qui entourent un premier volume central, et une deuxième unité de récipient (6) avec une deuxième paroi de fond (7) et une deuxième paroi latérale circonférentielle verticale (8), dans lequel la deuxième unité de récipient (6) est reçue dans le premier volume central de la première unité de récipient (2) de telle manière que la première (3) et la deuxième (7) paroi de fond soient positionnées à une distance l'une de l'autre pour créer le volume (10) pour recevoir l'air comme matériau thermiquement isolant.

12. Ensemble selon la revendication 11 dans lequel les parois latérales verticales (4, 8) de la première (2) et de la deuxième (6) unité de récipient comprennent des moyens de positionnement coopérants prévus pour varier la distance entre la première paroi de fond (3) de la première unité de récipient (2) et la deuxième paroi de fond (7) de la deuxième unité de récipient (6).

13. Ensemble selon une quelconque revendication précédente dans lequel au moins une partie du récipient de cuisson (1) est en aluminium.

14. Utilisation de l'ensemble selon une quelconque revendication précédente pour préparer du chocolat fondu ou une fondue au chocolat sur un barbecue ou dans un four à micro-ondes.

15. Utilisation telle que revendiquée dans la revendication 14 sur un barbecue selon laquelle le chocolat est maintenu dans l'état fondu pendant un temps suffisant pour permettre la consommation d'au moins une partie du chocolat fondu.
